# EUROPÄISCHE PATENTSCHRIFT

(11) **EP 1 627 212 B1**
(45) Veröffentlichungstag und Bekanntmachung des Hinweises auf die Patenterteilung: **12.12.2018**
(21) Anmeldenummer: 04730838.2
(22) Anmeldetag: 03.05.2004
(51) Int. Cl.: G01L 1/14, G01L 9/14, G01G 3/14, G01G 7/00

(54) **KRAFTMESSZELLE**
LOAD CELL
CAPTEUR DYNAMOMETRIQUE

(30) Priorität: 28.05.2003 DE 10325390
(43) Veröffentlichungstag der Anmeldung: 22.02.2006
(73) Patentinhaber: BAG Bizerba Automotive GmbH, 72336 Balingen (DE)
(72) Erfinder: SELIG, Klaus, Peter, 8606 Greifensee (CH); WURSTER, Klaus, 72124 Pliezhausen (DE)
(74) Vertreter: Hoeger, Stellrecht & Partner Patentanwälte mbB
(86) Internationale Anmeldenummer: PCT/EP2004/004662
(87) Internationale Veröffentlichungsnummer: WO 2004/106876

(56) Entgegenhaltungen:
- DE-A- 2 333 363
- DE-A- 3 534 608
- DE-A- 10 003 569
- DE-A- 19 609 921
- US-A- 3 335 381
- US-A- 3 960 013
- US-A- 6 104 100

## Beschreibung

Die Erfindung betrifft eine Kraftmesszelle mit einem elastisch verformbaren Membran-Kraftaufnehmer zur Aufnahme von zu bestimmenden Kräften, mit einer Sensoranordnung zur Erfassung der Kraftaufnehmerverformung und deren Umwandlung in ein elektrisches Wägesignal.

Eine Kraftmesszelle mit einem Membran-Kraftaufnehmer ist beispielsweise aus der DE 36 27 127 A1 bekannt. Diese Kraftmesszelle ist in der Form einer Kraftmessdose ausgebildet, bei der ein biegesteifes Trägerelement die Membran elastisch verformbar hält, wobei die Verformung der Membran gemäß dieser Druckschrift bevorzugt mit einer Sensoranordnung, die einen Hall-Generator beinhaltet, erfasst wird. Die Membran und das biegesteife Trägerelement bilden zusammen eine Kraftmessdose, in deren Innerem die Sensoranordnung untergebracht werden kann.

Aus der DE 41 32 108 ist ebenfalls eine Kraftmesszelle der eingangs beschriebenen Art bekannt, bei der die elastische Verformung der Membran mit einer kapazitiven Sensoranordnung erfasst wird.

Den vorgenannten Kraftmesszellen ist gemeinsam, dass sie nur Druckkräfte aufnehmen können und zudem in rauher Umgebung nur mit geringem Nutzen eingesetzt werden können.

Aus der US 3,335,381 ist ein Kraftaufnehmer bekannt, welcher ein Diaphragma aufweist mit einem kreisförmigen zentralen Bereich und einem ringförmigen Endbereich.

Aus der DE 35 34 608 A1 ist eine Anordnung zum Umwandeln von Kräften in elektrische Signale bekannt, bei dem eine sonst starre Verbindung zwischen einem Kraftaufnehmerelement und einem Biegeelement bei Überbelastung aufgehoben wird.

Aus der DE 196 09 921 A1 ist eine Vorrichtung zur Kraftmessung mit einer elektromechanischen Wägezelle bekannt, die einen ring- oder scheibenförmigen Verformungskörper aufweist, der mit einem zentralen Krafteinleitungskörper und einem äußeren Krafteinleitungsring verbunden ist.

Aus der DE 23 33 363 A1 ist eine Anordnung zur Vermeidung der Auswirkungen des Kriechens von mit Dehnungsmesseinrichtungen ausgestatteten elastischen Bauteilen bekannt.

Aus der DE 100 03 569 A1 ist ein Drucksensor mit einer Membran bekannt, wobei der Membran ein Signalgeber zugeordnet ist.

Aufgabe der vorliegenden Erfindung ist es, eine Kraftmesszelle der eingangs beschriebenen Art vorzuschlagen, welche robust ist und auch in beengten Verhältnissen eingebaut werden kann und insbesondere neben Druck- auch Zugkräfte aufnehmen und bestimmen kann.

Diese Aufgabe wird erfindungsgemäß durch den Gegenstand des Anspruchs 1 gelöst, wobei das Gehäuse den Kraftaufnehmer im Wesentlichen allseitig umgibt und eine Durchgangsöffnung aufweist, durch die hindurch der Membran-Kraftaufnehmer mit der zu bestimmenden Kraft beaufschlagbar ist,
wobei der Membran-Kraftaufnehmer ein mittig angeordnetes Krafteinleitungsteil, welches die Durchgangsöffnung durchdringt, und am Randbereich ein über mindestens eine der Membranoberflächen vorspringendes Randteil umfasst,
wobei im Innenraum des Gehäuses ein rückspringender Bereich ausgebildet ist, in dem das vorspringende Randteil des Kraftaufnehmers formschlüssig einrückbar ist,
wobei im Inneren des Gehäuses mehrere Anschlagflächen ausgebildet sind, welche die elastische Verformung des Membran-Kraftaufnehmers beim Einwirken von Zug- und/oder Druckkräften begrenzen, und
wobei das Krafteinleitungsteil einen Vorsprung aufweist, welcher als umlaufender Ringflansch ausgebildet ist und welcher mit den mehreren Anlageflächen im Sinne der Begrenzung von Zug- und/oder Druckkräften zusammenwirkt.

Durch die Verwendung eines biegesteifen Gehäuses, welches den Membran-Kraftaufnehmer und die Sensoranordnung aufnimmt und diese im Wesentlichen allseitig umgibt, lässt sich die erfindungsgemäße Kraftmesszelle sehr robust gestalten und in einer Vielzahl von rauhen Umgebungsbedingungen einsetzen. Dies resultiert insbesondere daraus, dass nicht nur die Sensoranordnung, sondern auch die Membran des Kraftaufnehmers quasi gekapselt in dem Gehäuse untergebracht ist. Lediglich eine Durchgangsöffnung in dem Gehäuse ist notwendig, damit die zu bestimmende Druck- oder Zugkraft auf den Membran-Kraftaufnehmer wirken kann.

Die Herstellung der erfindungsgemäßen Kraftmesszelle, insbesondere der Zusammenbau, ist durch das mehrteilige, biegesteife Gehäuse sehr vereinfacht, da dieses den Membran-Kraftaufnehmer mit seinem vorspringenden Rand in einem rückspringenden Bereich, beispielsweise einer Nut, formschlüssig aufnimmt. Der
Rand und der rückspringende Bereich können fertigungstechnisch ohne allzu großen Aufwand aufeinander abgestimmt ausgebildet werden, so dass der Rand des Membran-Kraftaufnehmers spielfrei in dem rückspringenden Bereich in einem ersten Gehäuseteil aufgenommen wird.

Mit einem weiteren Gehäuseteil kann dann der Rand des Membran-Kraftaufnehmers in dem rückspringenden Bereich des ersten Gehäuseteiles form- oder kraftschlüssig fixiert werden. Dies erlaubt im Fall des Versagens des Kraftaufnehmers bei der Endkontrolle einen einfachen Austausch des Membran-Kraftaufnehmers.

Ansonsten ist die erfindungsgemäße Kraftmesszelle hermetisch verschließbar. Dies bedeutet eine besonders gute Resistenz gegen Verschmutzungen und Beeinträchtigungen der Funktion auch in sehr schwierigen Umgebungen, beispielsweise in einer Vielzahl von Anordnungsmöglichkeiten in einem Automobil, insbesondere auch in dessen Innenraum, in dem Temperaturschwankungen, Staub und abrupte Belastungen häufig vorkommen.

Die erfindungsgemäße Kraftmesszelle lässt sich insbesondere dafür verwenden, auf den Sitz eines Kraftfahrzeuges einwirkende Gewichtskräfte zu bestimmen, wie sie z.B. im Zusammenhang mit der selektiven Ansteuerung von Airbag-Systemen zunehmend Verwendung finden. Die bevorzugten Einbaulagen sind zwischen Sitzschienen und Bodenblech des Fahrzeuges oder zwischen Sitzschale und Sitzunterbau.

Bevorzugt wird das Krafteinleitungsteil koaxial zur Durchgangsöffnung des Gehäuses angeordnet und weiter bevorzugt so ausgebildet, dass dieses im Wesentlichen komplementär zum Querschnitt der Durchgangsöffnung ausgebildet ist, so dass die Durchgangsöffnung des Gehäuses quasi durch das hier vorzugsweise mindestens teilweise hineinragende Krafteinleitungsteil im Wesentlichen ausgefüllt wird. Selbstverständlich muss zwischen Krafteinleitungsteil und Durchgangsöffnung ein minimaler Spalt vorgesehen sein, um das Krafteinleitungsteil im Wesentlichen reibungsfrei die auf die Kraftmesszelle einwirkende Kraft auf die Membran übertragen lassen zu können. Spalte von ca. 0,1 bis ca. 0,5 mm haben sich in der Praxis gut bewährt. Diesbezüglich kann vorgesehen sein, dass die Durchgangsöffnung des Gehäuses mit einem Kunststoffbelag, beispielsweise in Form einer Hülse, beaufschlagt ist, wobei das Kunststoffmaterial unter dem Gesichtspunkt eines möglichst niedrigen Reibungsbeiwertes ausgewählt wird.

Alternativ kann auch vorgesehen sein, wenn das Krafteinleitungsteil so ausgebildet wird, dass es über die Oberfläche des Gehäuses heraussteht, dass zur Abdichtung des Spaltes zwischen Durchgangsöffnung und Krafteinleitungsteil eine abschirmende Manschette aus einem flexiblen Material vorgesehen ist, welches die auf das Krafteinleitungsteil einwirkende Kraft im Wesentlichen unbeeinflusst lässt.

Weiter weist die erfindungsgemäße Kraftmesszelle einen integrierten mechanischen Überlastschutz auf. Ein solcher mechanischer Überlastschutz kann für Zug- und/oder Druckkräfte vorgesehen sein und bedeutet, dass bei einer Einwirkung einer übermäßig großen, d.h. nicht mehr für die sichere Funktion der Kraftmesszelle zugelassenen Kraft, diese nicht ungehindert auf die Membran wirken kann. Hierzu wird vorgesehen, dass im Inneren des Gehäuses eine oder mehrere Anschlagflächen ausgebildet sind, welche eine elastische Verformung des Membran-Kraftaufnehmers beim Einwirken von Zug- und/oder Druckkräften begrenzen. Dabei kann sich dann beispielsweise das Krafteinleitungsteil an einem Anschlag abstützen, so dass die maximale Verformung des Membran-Kraftaufnehmers begrenzt bleibt und damit eine mechanische Beschädigung durch Überlast ausgeschlossen wird.

Bei mehreren Anschlagflächen wird mindestens eine der Anschlagflächen der Überlastsicherung gegenüber Druckkräften und eine andere eine Überlastsicherung gegenüber Zugkräften übernehmen.

Die mit den Anschlagflächen zusammenwirkende Gegenfläche kann entweder an dem Membran-Kraftaufnehmer selbst oder aber am Krafteinleitungsteil ausgebildet sein. Beispielsweise kann das Krafteinleitungsteil einen Vorsprung aufweisen, welcher mit der einen oder anderen bzw. mehreren Anlageflächen im Sinne der Begrenzung von Zug- und/oder Druckkräften zusammenwirkt, die auf den Membran-Kraftaufnehmer wirken können.

Das Krafteinleitungsteil selbst ist häufig im Wesentlichen zylindrisch ausgebildet, so dass auch die Durchgangsöffnung des Gehäuses entsprechend zylindrisch ausgebildet wird. Das Krafteinleitungsteil trägt bei einer bevorzugten Ausführungsform einen Ringflansch, der als Vorsprung im Sinne der vorgenannten Überlastsicherung wirkt. Alternativ kann selbstverständlich auch vorgesehen sein, dass das Krafteinleitungsteil einen Rücksprung aufweist, in den ein gehäusefest angeordneter Vorsprung eingreift und so für eine Begrenzung der möglichen Bewegung des Krafteinleitungsteiles sorgt.

Der Ringflansch des Krafteinleitungsteiles kann aber vorteilhafterweise noch eine weitere Funktion übernehmen, nämlich das Krafteinleitungsteil mit der Membran zu verbinden. Hierbei wird die Verbindung zwischen Membran und Ringflansch vorzugsweise so gestaltet, dass der Ringflansch die Membranoberfläche auf beiden Seiten der Membran überragt, so dass oberhalb und unterhalb der Membran der Ringflansch im Sinne einer Überlastsicherung mit Anschlagflächen des Gehäuses kooperieren kann.

Die Membran und das Krafteinleitungsteil können bei manchen Ausführungsformen einstückig ausgebildet sein, d.h. Membran und Krafteinleitungsteil werden aus dem vollen Material herausgearbeitet.

Alternativ kann auch vorgesehen sein, dass die Membran an dem Krafteinleitungsteil, insbesondere an dessen Ringflansch, angeschweißt wird.

Bevorzugt wird die Membran als Kreisscheibe ausgebildet. Zur sicheren und definierten Befestigung der Membran in dem Gehäuse ist der vorspringende Rand als Ringbund oder als am Umfang in regelmäßigen Winkelabständen angeordnete Ringbundsegmente ausgebildet, und das Gehäuse wiederum weist in seinem Inneren eine Ringnut auf, in die der Ringbund bzw. die Segmente der Membran bei der Montage der Kraftmesszelle einsetzbar ist. Dies erlaubt eine sehr einfache und trotzdem sehr exakte Montage der Membran in dem biegefesten Gehäuse. Verschlossen wird das biegefeste Gehäuse vorzugsweise durch ein Bodenteil, welches die freie Oberfläche des Ringbundes der Membran beaufschlagt und in die Ringnut hineinpresst.

Das Krafteinleitungsteil ist einerseits, wie bereits erwähnt, an der Membran selbst festgelegt und weist darüber hinaus ein freies Ende auf, welches vorzugsweise ein Schraubgewinde umfasst, welches durch die Durchgangsöffnung des Gehäuses zugänglich ist oder gar aus diesem heraussteht.

Damit ist die Kraftmesszelle mit dem Krafteinleitungsteil sehr einfach zu montieren und beispielsweise auch als Schraubbolzen direkt an seinem Einsatzort als Montagemittel verwendbar.

Im letzteren Fall wird das Gehäuse bevorzugt, bezogen auf die von der Membran definierte Ebene, gegenüberliegend zur Durchgangsöffnung einen Schraubbolzen oder ein Schraubgewinde koaxial zur Durchgangsöffnung orientiert aufweisen. Damit lässt sich die Kraftmesszelle beidseitig mittels Schraubverbindungen an der Einsatzstelle sehr einfach montieren.

Das Krafteinleitungsteil kann sich in einer bevorzugten Ausführungsform auch durch die Membranebene hindurch erstrecken, wobei das erste freie Ende des Kraftaufnehmers sich in Richtung zu der Durchgangsöffnung des Gehäuses erstreckt und ein zweites freies Ende im Inneren des Gehäuses sich von der Membran auf deren anderer Seite weg erstreckt und im Inneren des Gehäuses endet. Bevorzugt wird dieses freie Ende ein Element der Sensoranordnung tragen, während ein weiteres Element der Sensoranordnung gehäusefest montiert wird.

Allgemein kann festgestellt werden, dass die Membran als regelmäßiges Vieleck mit einem Symmetriezentrum auszubilden ist, an dem dann das Krafteinleitungsteil angeordnet wird.

Ein einfaches Beispiel hierfür wäre eine streifenförmige Ausbildung der Membran, wobei dann das Krafteinleitungsteil mittig zur Längsrichtung des Membranstreifens anzuordnen wäre. Genauso vorstellbar wäre beispielsweise eine dreieckige Membran, ebenso wie andere Vieleckformen.

In einem Sonderfall hiervon, der allerdings der am meisten bevorzugte Fall ist, weist die Membran Kreisscheibenform auf, wie dies weiter oben bereits beschrieben wurde.

Bei der Erfindung kann der Magnet am Krafteinleitungsteil und der Hallsensor am Gehäuse angeordnet sein. Eine umgekehrte Anordnung, d.h. die Anordnung des Magneten am Gehäuse und die Anordnung des Hallsensors am Krafteinleitungsteil, ist ebenfalls möglich, jedoch ist die erstere Variante bevorzugt, da diese den Vorteil aufweist, dass die Signalleitungen des Sensors im Gehäusematerial geführt werden können und somit sehr platzsparend und gleichzeitig geschützt anzuordnen sind. Gleichzeitig wird vermieden, dass durch das Vorhandensein von Signalleitungen eine Verfälschung des Wägesignals eintreten kann.

Bei der Erfindung wird das Gehäuse der Kraftmesszelle vorzugsweise aus einem ferromagnetischen Stahl gebildet mit dem Vorteil, dass die Sensoranordnung nicht nur mechanisch, sondern auch elektromagnetisch gekapselt ist. Das Krafteinleitungsteil selbst, das den Magneten, insbesondere den Permanentmagneten aufnimmt, ist dann allerdings aus einem nicht-magnetischen Stahl herzustellen, da sich sonst ein magnetischer Kurzschluss ergeben würde. Bevorzugt wird der Hallsensor und der Magnet der Sensoranordnung so ausgebildet und angeordnet, dass der Hallsensor im unbelasteten Zustand der Kraftmesszelle ein elektrisches Signal mit einem Wert kleiner oder gleich 1/3 des maximalen Nutzsignales erzeugt.

Dies gewährleistet, dass für die Auswerteschaltung, die vorzugsweise ebenfalls im Inneren der Kraftmesszelle anzuordnen ist, eine ausreichende Reserve zur Verstärkung des Nutzsignales gegeben ist und ein ausreichendes Signal/Rauschverhältnis vorliegt.

Bei einer ersten Variante kann der Magnet dem Hallsensor gegenüber als Monopol-wirkend ausgebildet sein, wobei der Hallsensor eine geradzahlige Anzahl an Sensorelementen umfasst, die in Form einer zweidimensionalen Matrix dem Monopol gegenüberliegend angeordnet sind. Hierbei bilden jeweils zwei Sensorelemente einen Teil einer elektronischen Differenzschaltung.

Alternativ kann der Magnet dem Hallsensor gegenüber als Dipol-wirkend ausgebildet sein, wobei der Hallsensor ein oder mehrere Sensorelemente umfasst, deren Signale getrennt erfassbar sind.

Insbesondere ist vorstellbar, dass, wenn der Magnet in dem Krafteinleitungsteil angeordnet ist, zwei Hallsensoren diametral gegenüberliegend zu dem Krafteinleitungsteil bzw. dessen Längsrichtung angeordnet sind und ausgewertet werden.

Diese und weitere Vorteile der vorliegenden Erfindung werden im Folgenden anhand der Zeichnungen noch näher erläutert. Es zeigen im Einzelnen:
- Figur 1:: eine Schnittansicht durch eine erste Ausführungsform einer erfindungsgemäßen Kraftmesszelle;
- Figur 2:: eine Schnittansicht durch eine zweite Ausführungsform einer erfindungsgemäßen Kraftmesszelle;
- Figur 3:: eine Schnittansicht durch eine dritte Ausführungsform einer erfindungsgemäßen Kraftmesszelle;
- Figur 4:: eine Schnittansicht durch eine vierte Ausführungsform einer erfindungsgemäßen Kraftmesszelle.

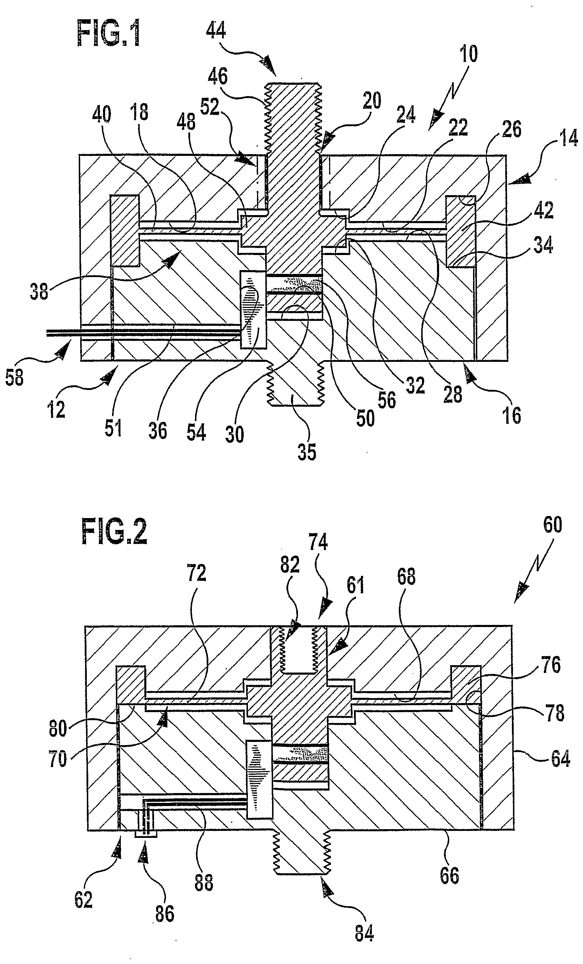

Figur 1 zeigt eine insgesamt mit dem Bezugszeichen 10 versehene Kraftmesszelle in einer ersten Ausführungsform. Die Kraftmesszelle 10 umfasst ein biegesteifes Gehäuse 12 mit einem einseitig geschlossenen, hohlzylindrischen Deckelteil 14 und einem das Deckelteil 14 verschließenden Bodenteil 16. Das Deckelteil 14 bildet mit dem Bodenteil 16 einen Innenraum 18, welcher mit der Umgebung der Kraftmesszelle 10 lediglich über eine Durchgangsöffnung 20 im Deckelteil 14 kommuniziert.

Der Innenraum 18 ist im Wesentlichen kreisscheibenförmig und wird auf Seiten des Deckelteils 14 begrenzt von einer Stirnwand 22, welche im Wesentlichen ringscheibenförmig ausgebildet ist und in ihrer Mitte an die Durchgangsöffnung 20 angrenzt.

Benachbart zu der Durchgangsöffnung 20 springt die Stirnwand 22 ringförmig zurück (Bezugszeichen 24). An ihrem Außenumfang geht die Stirnwand 22 in eine Ringnut 26 über.

Die innen liegende Oberfläche des Bodenteiles 16 weist eine im Wesentlichen komplementär zu der Stirnwand 22 ausgebildete Stirnseite 28 auf, welche mittig an ein koaxial zu der Durchgangsöffnung 20 angeordnetes Sackloch 30 angrenzt. Die Stirnseite 28 weist rings um das Sackloch 30 einen Rücksprung 32 auf, der im Wesentlichen spiegelbildlich zu dem Rücksprung 24 der Stirnwand 22 ausgebildet ist. Am äußeren Umfang der Stirnseite 28 ist ein ringsum laufender Rücksprung 34 vorgesehen, der im Wesentlichen spiegelbildlich zu der Nut 26 der Stirnwand 22 ausgebildet ist. An seiner außen liegenden Oberfläche trägt das Bodenteil 16 koaxial zum Sackloch 30 einen Schraubbolzen 35.

Benachbart zum Boden des Sackloches 30 erweitert sich dieses zu einer Aufnahme 36, in welcher ein Bestandteil einer noch zu erläuternden Sensoranordnung der Kraftmesszelle 10 unterzubringen ist.

In dem Innenraum 18 wird ein Membran-Kraftaufnehmer 38 aufgenommen mit einer kreisscheibenförmigen Membran 40, welche an ihrem Umfangsrand einen über beide Oberflächen der Membran 40 vorspringenden Ringbund 42 trägt. Der Ringbund 42 ist im Querschnitt im Wesentlichen rechteckig ausgebildet und greift spielfrei in die Nut 26 in der Stirnseite 22 des Deckelteiles 14 ein.

Die Membran 40 ist mit dem Ringbund 42 bevorzugt einstückig ausgebildet oder aber der Ringbund 42 wird mit der Membran 40 an deren Außenumfang verschweißt. Im eingerückten Zustand des Ringbundes 42 in die Nut 26 verbleibt zwischen der Membranoberfläche und der Stirnwand 22 ein Spalt, der bei Einwirkung einer Zug- bzw. Druckkraft eine elastische Verformung der Membran zulässt.

In der Mitte der Membran 40 ist ein Krafteinleitungsteil 44 angeordnet, welches im Wesentlichen eine Bolzenform aufweist. Ein Ende des Krafteinleitungsteiles durchdringt die Durchgangsöffnung 20 und ist mit einem Schraubgewinde 46 versehen, während das andere freie Ende des Krafteinleitungsteiles 44 von dem Sackloch 30 aufgenommen wird. Die Durchgangsöffnung 20 sowie das Sackloch 30 bilden eine Führung für das Krafteinleitungsteil 44, welche das Krafteinleitungsteil gegen Kippmomente stützt.

Im Bereich der Durchdringung der Membran 40 trägt das Krafteinleitungsteil einen umlaufenden Ringflansch 48, über den das Krafteinleitungsteil 44 mit der Membran 40 verbunden ist. Das Krafteinleitungsteil 44 kann im Prinzip einstückig mit der Membran 40 und dem Ringbund 42 ausgebildet sein oder aber als separates Teil hergestellt und in einem Durchbruch der Membran 40 eingesetzt und mit dieser dann verschweißt werden.

Der Ringflansch 48 wirkt mit den Rücksprüngen 24 und 32 zusammen als mechanischer Überlastschutz, d.h. die elastische Verformung der Membran 40 wird begrenzt durch die Verschieblichkeit des Krafteinleitungsteiles 44 in Richtung der Symmetrieachse der Durchgangsöffnung 20 sowie des Sackloches 30 und limitiert durch Anlage des Ringflansches 48 an dem Rücksprung 24 oder dem Rücksprung 32 das Einwirken von Zug- bzw. Druckkräften und damit die Verformung der Membran.

In dem in das Sackloch 30 eingreifenden Ende des Krafteinleitungsteiles 44 ist eine Querbohrung 50 vorgesehen, welche eine Aufnahme für ein weiteres Element der Sensoranordnung der Kraftmesszelle 10 bereitstellt.

Um die Bestimmung der auf die Kraftmesszelle einwirkenden Gewichtskraft möglichst unbeeinflusst zu lassen, kann vorgesehen sein, dass die Durchgangsöffnung 20 und gegebenenfalls auch die Wandung des Sackloches 30 mit einem Material, beispielsweise in Form einer Hülse 52, ausgekleidet ist (siehe strichpunktierte Darstellung bei Durchgangsöffnung 20), welches eine möglichst geringe Gleitreibung aufweist.

Die Sensoranordnung der erfindungsgemäßen Kraftmesszelle 10 besteht im Wesentlichen aus einem Hallsensorelement 54 und einem Permanentmagneten 56. Der Permanentmagnet 56 ist dabei in der Querbohrung 50 des Krafteinleitungsteils 44 fixiert und bewegt sich zusammen mit dem Krafteinleitungsteil 44 entlang von dessen Längsrichtung bei Einwirken von Zug- bzw. Druckkräften von dem Bodenteil 16 weg bzw. zu diesem hin.

Die in dem Bodenteil 16 vorgesehene Aufnahme 36 nimmt das Hallsensorelement 54 auf, welches über eine Bohrung 51 in dem Bodenteil 16 sowie einem hierzu fluchtenden Durchbruch in einer Seitenwandung des Deckelteils 14 über Signal- und Energieversorgungsleitungen 58 angeschlossen ist.

Bei der Auswahl der Sensoranordnung wie vorerwähnt wird das Deckelteil 14 sowie das Bodenteil 16 bevorzugt aus ferromagnetischem Stahl ausgebildet, so dass sich eine elektromagnetische Abschirmung für die Hallsensoranordnung ergibt.

Das Krafteinleitungsteil 44 ist aus einem nicht-magnetischen Material, insbesondere nicht-magnetischem Stahl gefertigt, um einen magnetischen Kurzschluss zu vermeiden.

Das Material, aus dem die Membran 40 sowie das Ringteil 42 gebildet ist, lässt sich aus unterschiedlichen Materialien auswählen, beispielsweise Aluminium. Aluminium ist auch geeignet, um das Krafteinleitungsteil 44 herzustellen. Die Membran 40 sowie das Ringteil 42 können aber auch aus Stahl hergestellt sein.

Verwendet man andere Sensoranordnungen, die nicht Gegenstand der Erfindung sind, beispielsweise eine optische Sensoranordnung, kann eine vergleichbare Einbaulage, wie in Figur 1 gezeigt, gewählt werden. Hier ergeben sich dann größere Freiheiten in der Auswahl der Materialien, aus denen die einzelnen Komponenten der Kraftmesszelle gebildet werden, da optische Sensoranordnungen als solche durch in der Umgebung vorkommende elektromagnetische Strahlungen nicht beeinflussbar sind. Allerdings ist es oft vorteilhaft, eine Auswerteelektronik zusammen mit einem Sensorelement, sei es ein Hallsensorelement oder ein optisches Detektionselement, auszubilden und in dem Innern der Kraftmesszelle anzuordnen, so dass bereits aufbereitete Signale über die Anschlussleitungen 58 nach außen abgegeben werden können. In einem solchen Fall ist auch bei einer optischen Sensoranordnung bevorzugt, einen elektromagnetischen abschirmenden Werkstoff zur Herstellung des Deckelteils 14 und des Bodenteils 16 zu verwenden, um auch bei rauhen elektromagnetischen Umgebungen eine sichere Funktion der Sensoranordnungselektronik zu gewährleisten.

Die Kennlinie einer Sensoranordnung mit Hallsensor und Permanentmagneten ist zwar nicht genau linear, doch kann eine Linearisierung des Sensorsignals unterbleiben, wenn eine Genauigkeit von 1% ausreichend ist.

Eine besonders hohe Temperaturstabilität lässt sich bei dieser Sensoranordnung dadurch erreichen, dass man zwei Hallsensorelemente einem Monopol seitens des Permanentmagneten gegenüber anordnet und das Signal als Differenzsignal aufnimmt. Alternativ hierzu wäre die Anordnung eines Dipols gegenüber einem Hallsensorelement zu werten.

Gleichzeitig erreicht man mit der Differenzmessung, dass man ein maximales Nutzsignal über die Verstärkeranordnung erhält und dies im Wesentlichen unbelastet von einem Nullpunktpegel erhalten werden kann.

Häufig lässt sich der Hallsensor mit einem Analogdigitalwandler auf einem Chip integrieren, so dass aus der Kraftmesszelle digitalisierte Signale erhalten werden, die auch in rauher elektromagnetischer Umgebung störunanfällig sind.

Figur 2 zeigt eine zweite Ausführungsform einer erfindungsgemäßen Kraftmesszelle 60 mit einem Gehäuse 62, welches von einem Deckelteil 64 und einem Bodenteil 66 gebildet wird. Im Innern des Gehäuses 62 wird zwischen dem Deckelteil 64 und dem Bodenteil 66 ein scheibenförmiger Innenraum 68 geschaffen, in welchem ein Membrankraftaufnehmer 70 aufgenommen wird.

Der Kraftaufnehmer 70 ist im Wesentlichen gleich wie der Kraftaufnehmer 44 der Figur 1 aufgebaut und weist neben einer Membran 72 in deren Mitte ein Krafteinleitungsteil 74 sowie am Umfangsrand einen über eine Oberfläche der Membran 72 überstehenden Ringbund 76 auf. Im montierten Zustand rückt der Ringbund 76 spielfrei in eine komplementär im Deckelteil 64 ausgeformte Ringnut 78 ein und wird in dieser Position von dem Bodenteil 66 gehalten. Hierzu weist das Bodenteil 66, anders als das Bodenteil 16 der Figur 1, an seinem Außenumfang einen ringsumlaufenden Vorsprung 80 auf, der gegen den Ringbund 76 anliegt. Gegenüber der Membran 72 hält die innen liegende Oberfläche des Bodenteils 66 Abstand.

Im mittleren Bereich des Innenraums 68 sind wieder Rücksprünge in den jeweiligen Innenoberflächen des Deckelteils 64 und des Bodenteils 66 vorgesehen, die mit einem entsprechenden Ringflansch seitens des Krafteinleitungsteils 74 eine mechanische Überlastsicherung gegen zu große Zug- und Druckkräfte bietet.

Anders als das Krafteinleitungsteil 44 steht das Krafteinleitungsteil 74 nicht über die Außenoberfläche des Deckelteils 64 hinaus, sondern endet ungefähr eben mit der Außenoberfläche. Um das Krafteinleitungsteil 74 mit der Umgebung verbinden zu können, um so sicher Zug- und/oder Druckkräfte mit der Kraftmesszelle 60 bestimmen zu können, weist das Krafteinleitungsteil 74 an seinem zur Außenoberfläche des Deckenteils weisenden freien Ende ein Sackloch 82 mit einem Innengewinde auf. Auf der gegenüberliegenden Seite weist das Bodenteil 66 einen Schraubbolzen 84 auf, der sich in Axialrichtung des Krafteinleitungsteils von der Außenoberfläche des Bodenteils 66 wegerstreckt. Selbstverständlich könnte an Stelle des Schraubbolzens 84 auch in das Bodenteil 66 ein Sackloch eingearbeitet sein, welches dann vorzugsweise ein Innengewinde tragen würde.

Die Anordnung und der Aufbau der Sensoranordnung in Figur 2 ist ähnlich dem im Figur 1 und soll hier deshalb nicht näher besprochen werden. Gegenüber Figur 1 ist jedoch die Verbindung der Sensoranordnung mit der Umgebung anders gelöst. Hier ist in dem Bodenteil 66 eine Buchse 86 vorgesehen, an der Signal- und Versorgungsleitungen 88 der Sensoranordnung enden, so dass die Kraftmesszelle 60 einfach beispielsweise mit einer zugehörigen Auswerteelektronik verbunden bzw. von dieser gelöst werden kann.

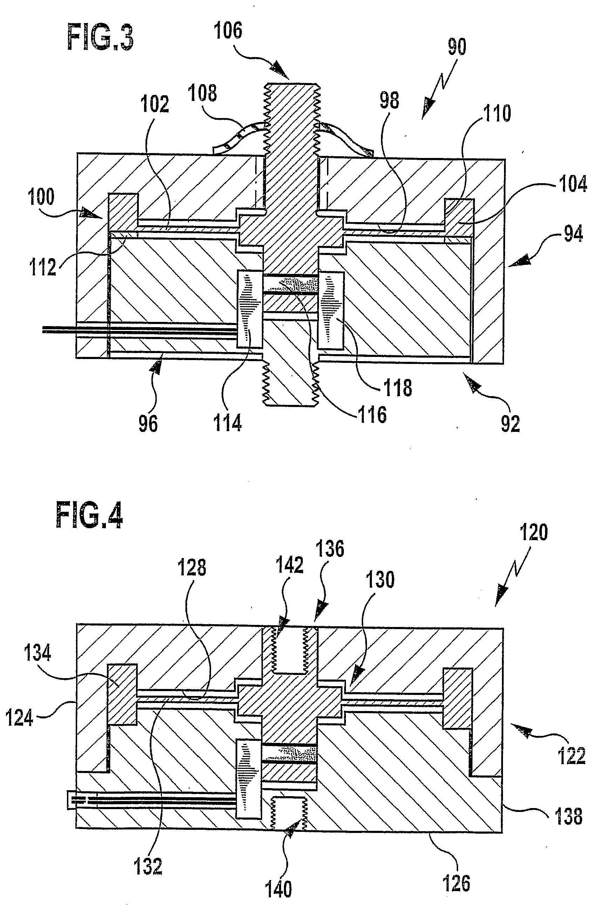

Figur 3 zeigt eine weitere alternative Ausführungsform einer Kraftmesszelle 90 mit einem Gehäuse 92 mit einem Deckelteil 94 und einem Bodenteil 96, welche wieder ähnlich wie die entsprechenden Teile in Figur 1 gestaltet sind.

Deckelteil 94 und Bodenteil 96 definieren zwischen sich einen Innenraum 98, welcher der Aufnahme eines Membrankraftaufnehmers 100 dient. Der Kraftaufnehmer 100 setzt sich zusammen aus einer Membran 102, welche an ihrem Außenumfang einen umlaufenden Ringbund 104 trägt und zentral von einem Krafteinleitungsteil 106 in Bolzenform durchsetzt wird. Die Ausbildung des Krafteinleitungsteils 106 ist vergleichbar der in Figur 1 gezeigten und beschriebenen, so dass hier nicht näher darauf eingegangen werden soll. Um eine zusätzliche Dichtigkeit des Gehäuses 92 zu erreichen, wird das Krafteinleitungsteil mit seinem nach außen abstehenden Schraubbolzenabschnitt von einer Gummimanschette 108 umgeben. So lässt sich der Innenraum 98 praktisch staubdicht von der Umgebung abschirmen.

Im eingesetzten Zustand greift der Ringsbund 104 in eine Ringnut 110 der Innenoberfläche des Deckelteils 94 ein und wird dort von dem Bodenteil 96 gehalten. Das Bodenteil 96 unterscheidet sich in seiner Ausführungsform von dem Bodenteil 16 der Figur 1, indem dort keine Ringnut oder kein ringförmiger Rücksprung am Außenumfang vorgesehen ist, sondern die Oberfläche des Bodenteils 96 in diesem Bereich eben ausgebildet ist. Um die nach innen weisende Oberfläche des Bodenteils 96 von der Oberfläche der Membran 102 zu beabstanden ist dann im Bereich des Ringbundes 104 zwischen dem Membrankraftaufnehmer 100 und dem Bodenteil 96 ein Distanzring 112 eingelegt.

Die Seitenwände des Deckelteils 94 sind so bemessen, dass sie über die außen liegende Oberfläche des Bodenteils 96 im zusammengebauten Zustand der Kraftmesszelle 90 etwas überstehen, so dass das Bodenteil 96 durch ein Verstemmen in dem Deckelteil 94 fixiert werden kann. Dies ist die einfachste und gleichzeitig sichere Fixierung des Bodenteils 96 in dem Deckelteil 94, und gleichzeitig lässt sich diese Art der Verbindung genauso dicht durchführen wie beispielsweise die Verwendung eines Schraubgewindes oder dergleichen. Letztlich bietet auch das Verschweißen von Bodenteil und Deckelteil eine sinnvolle Alternative.

Die in Figur 3 gezeigte Sensoranordnung ist zunächst vergleichbar mit der in Figur 1 gezeigten und weist ein Hallsensorelement 114 sowie einen Permanentmagneten 116 auf. Hier wird jedoch im Gegensatz zu der Figur 1 gegenüberliegend zu dem Hallsensor 114 ein weiterer Hallsensor 118 verwendet. Durch eine solche Anordnung eines ersten und eines weiteren Hallsensors 114, 118 lässt sich der Nullpunktsfehler der Sensoranordnung in erster Näherung eliminieren.

Figur 4 zeigt schließlich eine Variante der Ausführungsform der Figur 1 bezüglich der Ausbildung des Bodenteils sowie der Ausbildung der Schraubverbindungen seitens des Krafteinleitungsteils und des Bodenteils. Die dort dargestellte vierte Ausführungsform einer erfindungsgemäßen Kraftmesszelle 120 weist ein Gehäuse 122 auf, mit einem Deckelteil 124 und einem Bodenteil 126. Deckelteil 124 und Bodenteil 126 definieren zwischen sich einen Innenraum 128, in dem ein Membrankraftaufnehmer 130 aufgenommen wird. Der Kraftaufnehmer 130 setzt sich zusammen aus einer Membran 132, einem über beide Membranoberflächen überstehenden Ringbund 134 sowie einem Krafteinleitungsteil 136. Das Deckelteil 124 sowie das Bodenteil 126 weisen an ihren innen liegenden Oberflächen jeweils ringsumlaufende Rücksprünge auf, die den über beide Oberflächen der Membran 132 überstehenden Ringbund zwischen sich aufnehmen und spielfrei klemmen.

Im Gegensatz zu der Ausführung des Deckelteils 14 der Figur 1 verlaufen die Seitenwände des Deckelteils 124 nicht über die gesamte Höhe der Kraftmesszelle 120, während das Bodenteil 126 an seinem unteren Ende einen ringsum abstehenden Ringflansch 138 aufweist, welcher radialbündig mit den Seitenwänden des Deckelteils 124 fluchtet. Die Sensoranordnung der Ausführungsform der Figur 4 soll hier nicht näher beschrieben werden und nur darauf abgehoben, dass in dieser Ausführungsform ein durchgängiger Kanal in Radialrichtung von einer Ausnehmung zur Aufnahme des Hallsensors bis zum äußeren Umfang der Kraftmesszelle 120 führt und dort in einer Buchse zur Aufnahme dieser Signalleitungen endet.

Hier bietet sich dann zur Verbindung von Deckelteil und Bodenteil problemlos eine Schraubverbindung an, da die Orientierung im festgezogenen Zustand zwischen Bodenteil und Deckelteil im Hinblick auf die hier getroffene Kabelführung unerheblich ist. Alternativ ist hier auch eine Schweißverbindung sinnvoll.

Zur Verbindung der Kraftmesszelle 120 mit der Umgebung weist das Bodenteil 126 zentral ein Sackloch 140 mit einem Innengewinde auf, und koaxial hierzu ist in dem Krafteinleitungsteil 136 ebenfalls ein Sackloch 142 mit einem Innengewinde vorgesehen.

Es versteht sich aus der vorstehenden Beschreibung, dass die in den Figuren 1 bis 4 angegebenen Varianten der Ausbildung des Membrankraftaufnehmers, insbesondere bezüglich des Ringbundes sowie korrespondierend hierzu die Ausbildung der Innenoberflächen des Deckelteils bzw. des Bodenteils in den einzelnen Ausführungsformen austauschbar ist. Gleichfalls austauschbar sind die Lösungen, die gezeigt worden sind, um Schraubverbindungen mit den Kraftmesszellen herzustellen. Schließlich sind dem Fachmann andere Verbindungsarten, wie z.B. Schweißen oder Kleben, Keilverbindungen etc. geläufig, mit denen das Bodenteil und/oder das Krafteinleitungsteil mit der Messumgebung verbindbar ist. Ebenso ist deutlich, dass die spezielle Ausführungsform der Sensoranordnung der Figur 3 auch auf die Ausführungsformen der anderen Figuren übertragbar ist.

## Patentansprüche

1. Kraftmesszelle mit einem elastisch verformbaren Membran-Kraftaufnehmer (38; 100) zur Aufnahme von zu bestimmenden Druck- und Zugkräften,
- mit einer Sensoranordnung (54, 56; 114, 116, 118) zur Erfassung der Kraftaufnehmerverformung und deren Umwandlung in ein elektrisches Wägesignal wobei die Sensoranordnung (54, 56; 114, 116, 118) eine Sensoranordnung für eine berührungsfreie Wegmessung umfasst, eine induktiv arbeitende Sensoranordnung ist, und einen Hallsensor (54; 114, 118) und einen Magneten (56; 116), welcher ein Permanentmagnet ist, umfasst und
- mit einem biegesteifen mehrteiligen Gehäuse (12; 92) mit einem Innenraum (18; 98) zur Aufnahme und Halterung des Membran-Kraftaufnehmers (38; 100) und der Sensoranordnung (54, 56; 114, 116, 118),
wobei das Gehäuse (12; 92) den Kraftaufnehmer (38; 100) im Wesentlichen allseitig umgibt und eine Durchgangsöffnung (20) aufweist, durch die hindurch der Membran-Kraftaufnehmer (38; 100) mit der zu bestimmenden Kraft beaufschlagbar ist,
wobei der Membran-Kraftaufnehmer (38; 100) ein mittig angeordnetes Krafteinleitungsteil (44; 106), welches die Durchgangsöffnung (20) durchdringt, und am Randbereich ein über mindestens eine der Membranoberflächen vorspringendes Randteil (42; 104) umfasst,
wobei im Innenraum (18; 98) des Gehäuses (12; 92) ein rückspringender Bereich (34; 100) ausgebildet ist, in dem das vorspringende Randteil (42; 104) des Kraftaufnehmers (38; 100) formschlüssig einrückbar ist, wobei im Inneren des Gehäuses (12; 92) mehrere Anschlagflächen ausgebildet sind, welche die elastische Verformung des Membran-Kraftaufnehmers (38; 100) beim Einwirken von Zug- und/oder Druckkräften begrenzen, und
wobei das Krafteinleitungsteil (44; 106) einen Vorsprung (48) aufweist, welcher als umlaufender Ringflansch ausgebildet ist und welcher mit den mehreren Anlageflächen im Sinne der Begrenzung von Zug- und/oder Druckkräften zusammenwirkt.

2. Kraftmesszelle nach Anspruch 1, **dadurch gekennzeichnet, dass** das Krafteinleitungsteil (44; 106) koaxial zur Durchgangsöffnung (20) des Gehäuses (12; 92) angeordnet ist.

3. Kraftmesszelle nach Anspruch 1 oder 2, **dadurch gekennzeichnet, dass** sich das Krafteinleitungsteil (44; 106) mindestens teilweise in die Durchgangsöffnung (20) hinein erstreckt.

4. Kraftmesszelle nach Anspruch 3, **dadurch gekennzeichnet, dass** die Durchgangsöffnung (20) das Krafteinleitungsteil (44; 106) führt und gegen Kippmomente sichert.

5. Kraftmesszelle nach Anspruch 3 oder 4, **dadurch gekennzeichnet, dass** zwischen dem Krafteinleitungsteil (44; 106) und der Durchgangsöffnung (20) ein Spalt vorhanden ist, der eine Breite von ca. 0,1 bis ca. 0,5 mm aufweist.

6. Kraftmesszelle nach einem der Ansprüche 1 bis 5, **dadurch gekennzeichnet, dass** das Krafteinleitungsteil (44; 106) im Wesentlichen zylindrisch ausgebildet ist.

7. Kraftmesszelle nach einem der vorangehenden Ansprüche, **dadurch gekennzeichnet, dass** das Krafteinleitungsteil (44; 106) mit der Membran (40; 102) über den Ringflansch (48) verbunden ist und dass der Ringflansch (48) die Membranoberfläche auf beiden Seiten der Membran (40) überragt.

8. Kraftmesszelle nach einem der Ansprüche 1 bis 7, **dadurch gekennzeichnet, dass** die Membran (40; 102) und das Krafteinleitungsteil (44; 106) einstückig ausgebildet sind.

9. Kraftmesszelle nach einem der Ansprüche 1 bis 8, **dadurch gekennzeichnet, dass** die Membran (40; 102) als Kreisscheibe ausgebildet ist, dass der vorspringende Rand (42; 104) als umlaufender Ringbund oder als am Umfang in regelmäßigen Winkelabständen angeordnete Ringbundsegmente ausgebildet ist, und dass das Gehäuse (12; 92) in seinem Inneren eine Ringnut (26) aufweist, in die der Ringbund (42) bzw. die Ringbundsegmente formschlüssig einsetzbar ist/sind.

10. Kraftmesszelle nach einem der Ansprüche 1 bis 9, **dadurch gekennzeichnet, dass** das Krafteinleitungsteil (44; 106) an seinem der Membran (40; 102) abgewandten freien Ende ein Schraubgewinde (46) umfasst.

11. Kraftmesszelle nach einem der Ansprüche 1 bis 10, **dadurch gekennzeichnet, dass** das Krafteinleitungsteil (44) sich durch die Membranebene hindurch erstreckt, wobei ein erstes freies Ende des Kraftaufnehmers (38; 100) sich in Richtung zu dem Durchbruch (20) des Gehäuses (12; 92) erstreckt und ein zweites freies Ende im Inneren des Gehäuses (12; 92) endet und ein Element der Sensoranordnung (54; 56) trägt.

12. Kraftmesszelle nach einem der Ansprüche 1 bis 11, **dadurch gekennzeichnet, dass** das Gehäuse (12; 92) bezogen auf die von der Membran (40; 102) definierte Ebene gegenüberliegend zum Durchbruch einen Schraubbolzen oder ein Schraubgewinde koaxial zum Durchbruch (20) orientiert aufweist.

13. Kraftmesszelle nach einem der vorangehenden Ansprüche, **dadurch gekennzeichnet, dass** der Magnet (56; 116) am Krafteinleitungsteil (44; 106) und der Hallsensor (54; 114, 118) am Gehäuse (12; 92) angeordnet ist.

14. Kraftmesszelle nach einem der vorangehenden Ansprüche, **dadurch gekennzeichnet, dass** der Magnet (56; 116) am Gehäuse (12; 92) und der Hallsensor (54; 114, 118) am Krafteinleitungsteil (44; 106) angeordnet ist.

15. Kraftmesszelle nach einem der vorangehenden Ansprüche, **dadurch gekennzeichnet, dass** der Hallsensor (56; 114, 118) und der Magnet (54; 116) der Sensoranordnung so ausgebildet und angeordnet sind, dass der Hallsensor (56; 116) im unbelasteten Zustand der Kraftmesszelle ein elektrisches Signal mit einem Wert kleiner oder gleich einem Drittel des Wertes des maximalen Nutzsignales erzeugt.

16. Kraftmesszelle nach Anspruch 15, **dadurch gekennzeichnet, dass** der Magnet (56; 116) dem Hallsensor (54; 114, 118) gegenüber als Monopol wirkend ausgebildet ist und dass der Hallsensor (54; 114, 118) eine geradzahlige Anzahl an Sensorelementen umfasst, die in Form einer zweidimensionalen Matrix dem Monopol gegenüberliegend angeordnet sind, wobei jeweils zwei der Sensorelemente einen Teil einer elektronischen Differenzschaltung bilden.

17. Kraftmesszelle nach Anspruch 16, **dadurch gekennzeichnet, dass** der Magnet (56; 116) dem Hallsensor (54; 114, 118) gegenüber als Dipol wirkend ausgebildet ist und dass der Hallsensor (54; 114, 118) ein oder mehrere Sensorelemente, deren Signale getrennt erfassbar sind, umfasst.

18. Kraftmesszelle nach Anspruch 16, **dadurch gekennzeichnet, dass** der Magnet (116) am Krafteinleitungsteil (106) angeordnet ist und dass der Hallsensor zwei Sensorelemente (114, 118) umfasst, welche in bezüglich dem Krafteinleitungsteil (106) diametral gegenüberliegenden Positionen am Gehäuse gehalten sind.

## Claims

1. Force measuring cell with an elastically deformable membrane force transducer (38; 100) for receiving pressure and tensile forces to be be determined,
- with a sensor arrangement (54, 56; 114, 116, 118) for detecting the force transducer deformation and its conversion into an electrical weighing signal, wherein the sensor arrangement (54, 56; 114, 116, 118) comprises a sensor arrangement for a contact-free weight measurement, is an inductively working sensor arrangement, and comprises a Hall-effect sensor (54; 114, 118) and a magnet (56; 116) which is a permanent magnet, and
- with a bending-resistant multi-part housing (12; 92) with an inner space (18; 98) for accommodating and mounting the membrane force transducer (38; 100) and the sensor arrangement (54, 56; 114, 116, 118),
wherein the housing (12; 92) surrounds the force transducer (38; 100) substantially on all sides and has a through-opening (20) through which the membrane force transducer (38; 100) is able to be acted upon with the force to be determined,
wherein the membrane force transducer (38; 100) comprises a centrally arranged force-introducing part (44; 106) which penetrates the through-opening (20), and at the rim region a rim part (42; 104) projecting over at least one of the membrane surfaces,
wherein formed in the inner space (18; 98) of the housing (12; 92) is a recessed region (34; 100) in which the projecting rim part (42; 104) of the force transducer (38; 100) is able to engage in a form-fitting manner,
wherein formed in the interior of the housing (12; 92) are multiple stop faces which delimit the deformation of the membrane force transducer (38; 100) under the action of tensile and/or pressure forces, and
wherein the force-introducing part (44; 106) has a projection (48) which is configured as a circulating annular flange and which cooperates with the multiple stop faces for the purposes of delimiting tensile and/or pressure forces.

2. Force measuring cell in accordance with Claim 1, **characterized in that** the force-introducing part (44; 106) is arranged coaxial to the through-opening (20) of the housing (12; 92).

3. Force measuring cell in accordance with Claim 1 or 2, **characterized in that** the force-introducing part (44; 106) extends at least partially into the through-opening (20).

4. Force measuring cell in accordance with Claim 3, **characterized in that** the through-opening (20) guides the force-introducing part (44; 106) and secures it against tilting moments.

5. Force measuring cell in accordance with Claim 3 or 4, **characterized in that** a gap is present between the force-introducing part (44; 106) and the through-opening (20), which gap has a width of ca. 0.1 to ca. 0.5 mm.

6. Force measuring cell in accordance with any one of Claims 1 to 5, **characterized in that** the force-introducing part (44; 106) is of substantially cylindrical configuration.

7. Force measuring cell in accordance with any one of the preceding Claims, **characterized in that** the force-introducing part (44; 106) is connected to the membrane (40; 102) by way of the annular flange (48), and **in that** the annular flange (48) projects beyond the membrane surface on both sides of the membrane (40).

8. Force measuring cell in accordance with any one of Claims 1 to 7, **characterized in that** the membrane (40; 102) and the force-introducing part (44; 106) are formed as one piece.

9. Force measuring cell in accordance with any one of Claims 1 to 8, **characterized in that** the membrane (40; 102) is configured as a circular disc, **in that** the projecting rim (42; 104) is configured as a circulating annular collar or as annular collar segments arranged on the circumference at regular angular distances, and **in that** the housing (12; 92) has in its interior an annular groove (26) into which the annular collar (42) and the annular collar segments, respectively, is/are insertible in a form-fitting manner.

10. Force measuring cell in accordance with any one of Claims 1 to 9, **characterized in that** the force-introducing part (44; 106) comprises a screw threading (46) at its free end remote from the membrane (40; 102).

11. Force measuring cell in accordance with any one of Claims 1 to 10, **characterized in that** the force-introducing part (44) extends through the membrane plane, wherein a first free end of the force transducer (38; 100) extends in the direction to the aperture (20) of the housing (12; 92) and a second free end ends in the interior of the housing (12; 92) and bears an element of the sensor arrangement (54; 56).

12. Force measuring cell in accordance with any one of Claims 1 to 11, **characterized in that** the housing (12; 92) has a screw bolt or a screw threading oriented coaxial to the aperture (20) opposite the aperture with respect to the plane defined by the membrane (40; 102).

13. Force measuring cell in accordance with any one of the preceding Claims, **characterized in that** the magnet (56; 116) is arranged on the force-introducing part (44; 106) and the Hall-effect sensor (54; 114, 118) on the housing (12; 92).

14. Force measuring cell in accordance with any one of the preceding Claims, **characterized in that** the magnet (56; 116) is arranged on the housing (12; 92) and the Hall-effect sensor (54; 114, 118) on the force-introducing part (44; 106).

15. Force measuring cell in accordance with any one of the preceding Claims, **characterized in that** the Hall-effect sensor (56; 114, 118) and the magnet (54; 116) of the sensor arrangement are configured and arranged such that the Hall-effect sensor (56; 116) in the unloaded state of the force measuring cell generates an electrical signal with a value smaller than or equal to a third of the value of the maximal useful signal.

16. Force measuring cell in accordance with Claim 15, **characterized in that** the magnet (56; 116) is configured acting as a monopole with respect to the Hall-effect sensor (54; 114, 118), and **in that** the Hall-effect sensor (54; 114, 118) comprises an even number of sensor elements which are arranged in the form of a two dimensional matrix opposite the monopole, wherein in each case two sensor elements form a part of an electronic differential circuit.

17. Force measuring cell in accordance with Claim 16, **characterized in that** the magnet (56; 116) is configured acting as a dipole with respect to the Hall-effect sensor (54; 114, 118), and **in that** the Hall-effect sensor (54; 114, 118) comprises one or more sensor elements, the signals of which are separately detectable.

18. Force measuring cell in accordance with Claim 16, **characterized in that** the magnet (116) is arranged on the force-introducing part (106) and **in that** the Hall-effect sensor comprises two sensor elements (114, 118) which are held on the housing in diametrically opposed positions with respect to the force-introducing part (106).

## Revendications

1. Capteur dynamométrique avec un dispositif d'enregistrement dynamométrique à membrane (38 ; 100) déformable de manière élastique pour l'enregistrement de forces de compression et de traction à déterminer,
- avec un dispositif de détection (54, 56 ; 114, 116, 118) pour la détection de la déformation du dispositif d'enregistrement dynamométrique et sa conversion en un signal de pesée électrique dans lequel le dispositif de détection (54, 56; 114, 116, 118) comprend un dispositif de détection pour une mesure de distance sans contact, est un dispositif de détection fonctionnant par induction, et comprend un capteur à effet Hall (54 ; 114, 118) et un aimant (56 ; 116), qui est un aimant permanent, et
- avec un boîtier (12 ; 92) rigide en flexion à plusieurs parties avec un espace intérieur (18 ; 98) pour la réception et la fixation du dispositif d'enregistrement dynamométrique à membrane (38 ; 100) et du dispositif de détection (54, 56 ; 114, 116, 118),
dans lequel le boîtier (12; 92) entoure sensiblement de tous les côtés le dispositif d'enregistrement dynamométrique (38 ; 100) et présente un orifice de passage (20) à travers lequel le dispositif d'enregistrement dynamométrique à membrane (38 ; 100) peut être sollicité avec la force à déterminer,
dans lequel le dispositif d'enregistrement dynamométrique à membrane (38 ; 100) comprend une partie d'introduction de force (44 ; 106) agencée au milieu, qui traverse l'orifice de passage (20), et, au niveau de la zone de bord, une partie de bord (42 ; 104) faisant saillie d'au moins une des surfaces de membrane,
dans lequel une zone en retrait (34 ; 100), dans laquelle la partie de bord en saillie (42 ; 104) du dispositif d'enregistrement dynamométrique (38; 100) est enclenchable par correspondance de forme, est réalisée dans l'espace intérieur (18 ; 98) du boîtier (12 ; 92),
dans lequel plusieurs surfaces de butée, qui limitent la déformation élastique du dispositif d'enregistrement dynamométrique à membrane (38 ; 100) lors de l'action de forces de traction et/ou de compression, sont réalisées à l'intérieur du boîtier (12 ; 92), et
dans lequel la partie d'introduction de force (44 ; 106) présente une saillie (48), qui est réalisée en tant que bride annulaire périphérique et qui coopère avec la pluralité de surfaces de butée au sens de la limitation de forces de traction et/ou de compression.

2. Capteur dynamométrique selon la revendication 1, **caractérisé en ce que** la partie d'introduction de force (44 ; 106) est agencée coaxialement à l'orifice de passage (20) du boîtier (12 ; 92).

3. Capteur dynamométrique selon la revendication 1 ou 2, **caractérisé en ce que** la partie d'introduction de force (44; 106) s'étend au moins en partie dans l'orifice de passage (20).

4. Capteur dynamométrique selon la revendication 3, **caractérisé en ce que** l'orifice de passage (20) guide la partie d'introduction de force (44; 106) et la protège contre les couples de basculement.

5. Capteur dynamométrique selon la revendication 3 ou 4, **caractérisé en ce qu'**il existe une fente, qui présente une largeur d'environ 0,1 à environ 0,5 mm, entre la partie d'introduction de force (44 ; 106) et l'orifice de passage (20).

6. Capteur dynamométrique selon l'une quelconque des revendications 1 à 5, **caractérisé en ce que** la partie d'introduction de force (44 ; 106) est réalisée de manière sensiblement cylindrique.

7. Capteur dynamométrique selon l'une quelconque des revendications précédentes, **caractérisé en ce que** la partie d'introduction de force (44 ; 106) est reliée à la membrane (40; 102) par le biais de la bride annulaire (48) et que le bride annulaire (48) dépasse la surface de membrane des deux côtés de la membrane (40).

8. Capteur dynamométrique selon l'une quelconque des revendications 1 à 7, **caractérisé en ce que** la membrane (40; 102) et la partie d'introduction de force (44 ; 106) sont réalisées d'un seul tenant.

9. Capteur dynamométrique selon l'une quelconque des revendications 1 à 8, **caractérisé en ce que** la membrane (40 ; 102) est réalisée en tant que disque circulaire, que le bord en saillie (42 ; 104) est réalisé en tant que collet annulaire périphérique ou en tant que segments de collet annulaire agencés à des distances angulaires régulières sur la périphérie, et que le boîtier (12 ; 92) présente dans son intérieur une rainure annulaire (26), dans laquelle le collet annulaire (42) ou les segments de collet annulaire est/sont insérable(s) par correspondance de forme.

10. Capteur dynamométrique selon l'une quelconque des revendications 1 à 9, **caractérisé en ce que** la partie d'introduction de force (44 ; 106) comprend un filetage (46) au niveau de son extrémité libre opposée à la membrane (40 ; 102).

11. Capteur dynamométrique selon l'une quelconque des revendications 1 à 10, **caractérisé en ce que** la partie d'introduction de force (44) s'étend à travers le plan de membrane, dans lequel une première extrémité libre du dispositif d'enregistrement dynamométrique (38 ; 100) s'étend en direction du passage (20) du boîtier (12; 92) et une deuxième extrémité libre se termine à l'intérieur du boîtier (12 ; 92) et porte un élément du dispositif de détection (54 ; 56).

12. Capteur dynamométrique selon l'une quelconque des revendications 1 à 11, **caractérisé en ce que** le boîtier (12 ; 92) présente par rapport au plan défini par la membrane (40 ; 102) en face du passage un boulon fileté ou un filetage orienté coaxialement au passage (20).

13. Capteur dynamométrique selon l'une quelconque des revendications précédentes, **caractérisé en ce que** l'aimant (56 ; 116) est agencé au niveau de la partie d'introduction de force (44; 106) et le capteur à effet Hall (54; 114, 118) est agencé au niveau du boîtier (12 ; 92).

14. Capteur dynamométrique selon l'une quelconque des revendications précédentes, **caractérisé en ce que** l'aimant (56 ; 116) est agencé au niveau du boîtier (12 ; 92) et le capteur à effet Hall (54 ; 114, 118) est agencé au niveau de la partie d'introduction de force (44 ; 106).

15. Capteur dynamométrique selon l'une quelconque des revendications précédentes, **caractérisé en ce que** le capteur à effet Hall (56 ; 114, 118) et l'aimant (54 ; 116) du dispositif de détection sont réalisés et agencés de sorte que le capteur à effet Hall (56; 116) génère à l'état non sollicité du capteur dynamométrique un signal électrique d'une valeur inférieure ou égale à un tiers de la valeur du signal utile maximum.

16. Capteur dynamométrique selon la revendication 15, **caractérisé en ce que** l'aimant (56 ; 116) est réalisé de manière à agir en tant que monopôle par rapport au capteur à effet Hall (54 ; 114, 118) et que le capteur à effet Hall (54 ; 114, 118) comprend un nombre pair d'éléments de capteur, qui sont agencés de manière opposée au monopôle sous forme de matrice bidimensionnelle, dans lequel respectivement deux des éléments de capteur forment une partie d'un circuit différentiel électronique.

17. Capteur dynamométrique selon la revendication 16, **caractérisé en ce que** l'aimant (56 ; 116) est réalisé de manière à agir en tant que dipôle par rapport au capteur à effet Hall (54 ; 114, 118) et que le capteur à effet Hall (54 ; 114, 118) comprend un ou plusieurs éléments de capteur, dont les signaux peuvent être détectés séparément.

18. Capteur dynamométrique selon la revendication 16, **caractérisé en ce que** l'aimant (116) est agencé au niveau de la partie d'introduction de force (106) et que le capteur à effet Hall comprend deux éléments de capteur (114, 118) qui sont retenus au niveau du boîtier dans des positions diamétralement opposées par rapport à la partie d'introduction de force (106).
